# EUROPEAN PATENT APPLICATION

(11) **EP 3 232 677 A1**
(43) Date of publication of application: **18.10.2017**
(21) Application number: 15868534.7
(22) Date of filing: 08.12.2015
(51) Int. Cl.: H04N 21/436

(54) **VIDEO GENERATING DEVICE, VIDEO OUTPUT DEVICE, VIDEO OUTPUT SYSTEM, VIDEO GENERATING METHOD, VIDEO OUTPUT METHOD, VIDEO OUTPUT SYSTEM CONTROL METHOD, AND RECORDING MEDIUM**

(30) Priority: 10.12.2014 JP 2014249981
(71) Applicant: NEC Corporation, Tokyo 108-8001 (JP)
(72) Inventor: KEZUKA, Terusumi, Tokyo 108-8001 (JP); TANAKA, Ryohei, Tokyo 108-8001 (JP)
(74) Representative: Vossius & Partner Patentanwälte Rechtsanwälte mbB
(86) International application number: PCT/JP2015/006118
(87) International publication number: WO 2016/092835

(57) **Abstract**

Provided is a video generating device or the like capable of controlling a light source used to output an output image, said control being synchronized with the output image, without the addition of a control interface. A video generating device 200B according to one mode of embodiment of the present invention is provided with: a converting unit 213 which converts a control signal, which is generated on the basis of an output image and which controls a light source used to output the output image, into a control image, which is an image representing said control signal; a synthesizing unit 214 which synthesizes a synthesized image in which the control image is incorporated into a second region of an image including a first region, which is an image region including the output image, where said second region is different from said first region; a video signal generating unit 201 which converts the synthesized image into a video signal; and a transmitting unit 202 which transmits the video signal to a video output device 100 provided with: a control signal extracting unit 103 which, in response to receiving the video signal, extracts, as the control image, the second region of the synthesized image represented by the received video signal, and converts the extracted control image into a control signal; and an output unit 110 which outputs, as the output image, the first region of the image represented by the received video signal, while controlling the light source in accordance with the converted control signal.

## Description

### Technical Field

The present invention relates to an image processing technique of generating and outputting a video.

### Background Art

Communication interfaces conforming to the HDMI (High-Definition Multimedia Interface, registered trademark) standard can transmit not only videos and audio but also control information for controlling other devices.

PTL 1 discloses a display device which changes an area where a video is displayed, resolution and the like according to received control information. In PTL 1, the control information is a command of CEC (Consumer Electronics Control) which is standardized in the HDMI.

PTL 2 discloses a multimedia data reproducing system which embeds a control signal for controlling an external device different from a reproducing device which reproduces a video transmitted by a video signal in a part of the transmitted video signal. The relevant control signal is extracted by a converter and supplied to the external device by the converter. In PTL 2, the above described external device controlled by the relevant control signal is, for example, an amusement equipment supplying fragrance, a lighting device for lighting a room and the like, an air conditioner, and the like.

PTL 3 discloses an example of a circuit for controlling, by a control signal, an LED (Light Emitting Diode) and the like which emits light at three different wavelengths and is used as a light source for a projection display device for projecting a video.

### Citation List

### Patent Literature

[PTL 1] Japanese Unexamined Patent Application Publication No. 2011-030081
[PTL 2] Japanese Unexamined Patent Application Publication No. 2009-159442
[PTL 3] Japanese Unexamined Patent Application Publication (Translation of PCT Application) No. 2004-533111

### Summary of Invention

### Technical Problem

The technique disclosed in PTL 1 is a technique of changing an area where a video is displayed, resolution and the like. The technique described in PTL 2 is a technique of controlling an external device such as an amusement equipment and an air conditioner. The circuit in PTL 3 synchronizes image data and color output of a light source such as an LED and the like emitting light at three different wavelengths by a control signal.

The techniques in PTL 1 to 3 are not able to execute control synchronizing with an output image of a light source used for outputting the output image without adding a control interface.

One of purposes of the present invention is to provide a video generating device capable of executing control synchronizing with an output image of a light source used for outputting the output image without adding a control interface.

### Solution to Problem

A video generating device according to an aspect of the present invention includes: converting means for converting a control signal which is generated based on an output image for controlling a light source used for outputting the output image to a control image as an image representing the control signal; synthesizing means for synthesizing a synthesized image in which the control image is incorporated in a second area different from a first area of an image including the first area as an image area including the output image; video signal generating means for converting the synthesized image into a video signal; and transmitting means for transmitting the video signal to a video output device including control signal extracting means for extracting the second area of the synthesized image represented by the received video signal as the control image and converting the extracted control image into a control signal in response to receiving of the video signal, and output means for outputting an image of the first area of the image represented by the received video signal as the output image while controlling the light source according to the converted control signal.

A video output device according to an aspect of the present invention includes: receiving means for receiving a video signal which is a signal converted from a synthesized image in which a control image as an image converted from a control signal generated based on an output image for controlling a light source used for outputting the output image and representing the control signal is incorporated in a second area different from a first area of an image including the first area as an image area including the output image; control signal extracting means for extracting the second area of the synthesized image represented by the received video signal as the control image and converting the extracted control image into a control signal in response to receiving of the video signal; and output means for outputting an image of the first area of the image represented by the received video signal as the output image while controlling the light source according to the converted control signal.

A video output system according to an aspect of the present invention includes: a video generating device including converting means for converting a control signal generated based on an output image for controlling a light source used for outputting the output image into a control image as an image representing the control signal, synthesizing means for synthesizing a synthesized image in which the control image is incorporated in a second area different from a first area of an image including the first area as an image area including the output image, video signal generating means for converting the synthesized image into a video signal, and transmitting means for transmitting the video signal to a video output device; and the video output device including receiving means for receiving the video signal, control signal extracting means for extracting the second area of the synthesized image represented by the received video signal as the control image and converting the extracted control image into a control signal in response to receiving of the video signal, and output means for outputting an image of the first area of the image represented by the received video signal as the output image while controlling the light source according to the converted control signal.

A video generating method according to an aspect of the present invention includes: converting a control signal generated based on an output image for controlling a light source used for outputting the output image into a control image as an image representing the control signal; synthesizing a synthesized image in which the control image is incorporated in a second area different from a first area of an image including the first area as an image area including the output image; converting the synthesized image into a video signal; and, transmitting the video signal to a video output device including control signal extracting means for extracting the second area of the synthesized image represented by the received video signal as the control image and converting the extracted control image into a control signal in response to receiving of the video signal, and output means for outputting an image of the first area of the image represented by the received video signal as the output image while controlling the light source according to the converted control signal.

A video output method according to an aspect of the present invention includes: receiving a video signal which is a signal converted from a synthesized image in which a control image as an image converted from a control signal generated based on an output image for controlling a light source used for outputting the output image and representing the control signal is incorporated in a second area different from a first area of an image including the first area as an image area including the output image; extracting the second area of the synthesized image represented by the received video signal as the control image and converting the extracted control image into a control signal in response to receiving of the video signal; and outputting an image of the first area of the image represented by the received video signal as the output image while controlling the light source according to the converted control signal.

A video output system controlling method according to an aspect of the present invention includes: causing a video generating device to perform operations of converting a control signal generated based on an output image for controlling a light source used for outputting the output image into a control image as an image representing the control signal, synthesizing a synthesized image in which the control image is incorporated in a second area different from a first area of an image including the first area as an image area including the output image, converting the synthesized image into a video signal, and transmitting the video signal to a video output device; and causing the video output device to perform operations of receiving the video signal, extracting the control image from the second area of the received synthesized image and converting the extracted control image into a control signal in response to receiving of the video signal, and outputting an image of the first area of the image represented by the received video signal as the output image while controlling the light source according to the converted control signal.

A video generating program according to an aspect of the present invention causes a computer to operate as converting means for converting a control signal generated based on an output image for controlling a light source used for outputting the output image into a control image as an image representing the control signal, synthesizing means for synthesizing a synthesized image in which the control image is incorporated in a second area different from a first area of an image including the first area as an image area including the output image, video signal generating means for converting the synthesized image into a video signal, and transmitting means for transmitting the video signal to a video output device including control signal extracting means for extracting the second area of the synthesized image represented by the received video signal as the control image and converting the extracted control image into a control signal in response to receiving of the video signal; and output means for outputting an image of the first area of the image represented by the received video signal as the output image while controlling the light source according to the converted control signal.

A video outputting program according to an aspect of the present invention causes a computer to operate as receiving means for receiving a video signal which is a signal converted from a synthesized image in which a control image as an image converted from a control signal generated based on an output image for controlling a light source used for outputting the output image and representing the control signal is incorporated in a second area different from a first area of an image including the first area as an image area including the output image, control signal extracting means for extracting the second area of the synthesized image represented by the received video signal as the control image and converting the extracted control image into a control signal in response to receiving of the video signal, and output means for outputting an image of the first area of the image represented by the received video signal as the output image while controlling the light source according to the converted control signal.

### Advantageous Effects of Invention

The control can be executed which synchronizes with an output image of a light source used for outputting the output image without adding a control interface.

### Brief Description of Drawings

[Fig. 1] Fig. 1 is a block diagram illustrating a configuration of a video output system of a first example embodiment of the present invention.
[Fig. 2] Fig. 2 is a diagram schematically illustrating connection between a video output device and a video generating device 200 of the first example embodiment of the present invention.
[Fig. 3] Figs. 3 is a diagram schematically illustrating a synthesized image.
[Fig. 4] Fig. 4 is a flowchart illustrating an example of an operation of the video generating device of the first example embodiment of the present invention.
[Fig. 5] Fig. 5 is a flowchart illustrating an example of an operation of a video output device of the first and second example embodiments of the present invention.
[Fig. 6] Fig. 6 is a diagram schematically illustrating a configuration example of a modification of the first example embodiment of the present invention.
[Fig. 7] Fig. 7 is a block diagram illustrating a configuration of a video output system of the second example embodiment of the present invention.
[Fig. 8] Fig. 8 is a flowchart illustrating an example of an operation of a video generating device of the second example embodiment of the present invention.
[Fig. 9] Fig. 9 is a block diagram illustrating a configuration of a video generating device of a third example embodiment of the present invention.
[Fig. 10] Fig. 10 is a diagram illustrating an example of a hardware configuration of a computer capable of achieving each video generating device and each video output device according to the example embodiments of the present invention.
[Fig. 11] Fig. 11 is a diagram schematically illustrating an implementation example of a video output system 10 of the first example embodiment of the present invention.
[Fig. 12] Fig. 12 is a block diagram illustrating an example of a configuration of the video output system which is implemented by a dedicated circuit of the first example embodiment of the present invention.
[Fig. 13] Fig. 13 is a block diagram illustrating an example of a configuration of the video output system which is implemented by a dedicated circuit of the second example embodiment of the present invention.

### Description of Embodiments

Next, example embodiments of the present invention are described in detail with reference to the drawings.

### <First Example Embodiment>

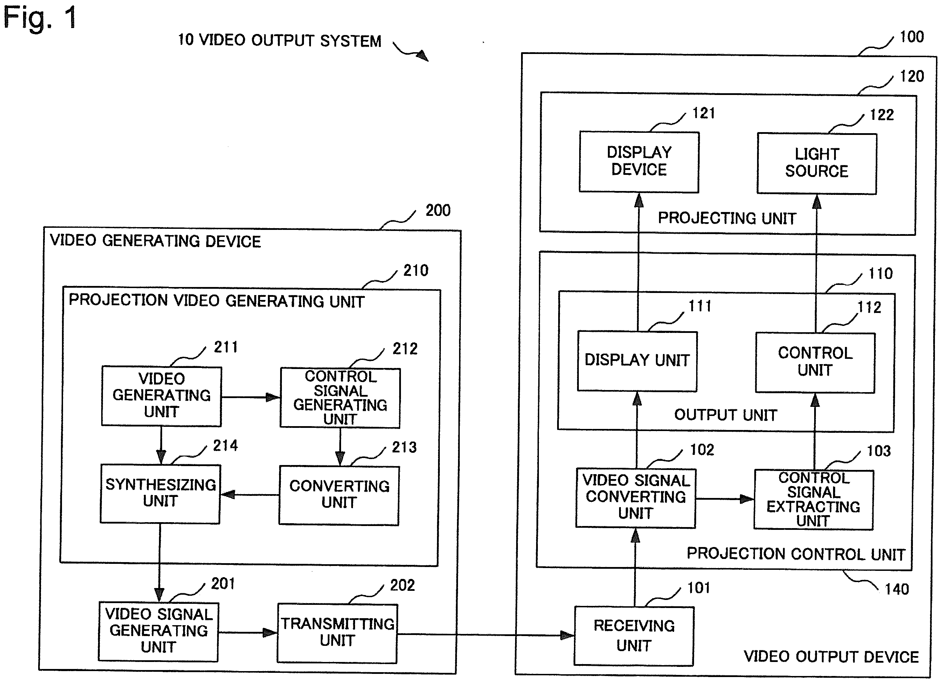

Fig. 1 is a block diagram illustrating a configuration of a video output system 10 of a first example embodiment of the present invention.

With reference to Fig. 1, the video output system 10 includes a video output device 100 and a video generating device 200. The video output device 100 and the video generating device 200 are communicably connected with each other.

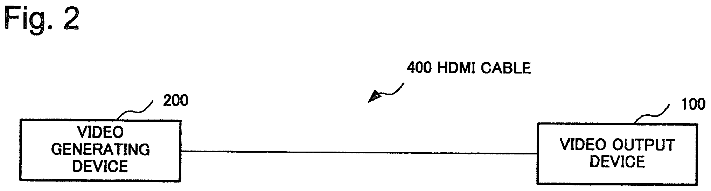

Fig. 2 schematically represents the connection between the video output device 100 and the video generating device 200 of the first example embodiment of the present invention. As illustrated in Fig. 2, the video output device 100 and the video generating device 200 may be connected by, for example, an HDMI cable 400.

As illustrated in Fig. 1, the video output device 100 includes a receiving unit 101, a projecting unit 120, and a projection control unit 140. The projection control unit 140 includes a video signal converting unit 102, a control signal extracting unit 103, and an output unit 110. The output unit 110 includes a display unit 111 and a control unit 112. The projecting unit 120 includes a display device 121 and a light source 122.

The projecting unit 120 projects an image (output image) displayed on the display device 121 by the light emitted from the light source 122. An image displayed on the display device 121 is rewritten by the display unit 111 of the output unit 110. The display unit 111 sequentially rewrites the image displayed by the display device 121, and thus the projecting unit 120 can project the video. The light source 122 is controlled by the control unit 112 of the output unit 110.

The display device 121 is, for example, a display device, such as an LCOS (Liquid crystal on silicon), which is capable of projecting a video to be displayed by reflection of light from the light source 122. The display device 121 may be a display device which is capable of projecting the video to be displayed by transmission of light from the light source 122. As described above, the display unit 111 of the output unit 110 is capable of rewriting an image displayed on the display device 121.

The light source 122 is, for example, a laser generating device which generates and emits laser light. The light source 122 may be a light source other than the laser generating device. The light source 122 may be a light source which can vary intensity and color of irradiated light for each pixel of the display device 121. The light source 122 can vary intensity and color of irradiated light for each pixel by, for example, irradiating laser light of a plurality of wavelengths for each pixel and varying the intensity of the irradiated laser light for each wavelength. As described above, the control unit 112 of the output unit 110 can control the light source 122. The control unit 112 can perform control such that, for example, the light source 122 varies the intensity and the color of irradiated light for each pixel of an image displayed on the display device 121. The control performed by the control unit 112 is not limited to the above. The projecting unit 120 can project a video by, for example, cooperative operations between the display device 121 and the light source 122 for each frame of the video. The above-described control performed by the control unit 112 on the light source 122 may be control to cause the light source 122 to cooperatively operate with the display device 121.

The output unit 110, the display unit 111, and the control unit 112 are described in detail below.

The video generating device 200 includes a projection video generating unit 210, a video signal generating unit 201, and a transmitting unit 202. The projection video generating unit 210 includes a video generating unit 211, a control signal generating unit 212, a converting unit 213, and a synthesizing unit 214.

The video generating device 200 is achieved by a mobile terminal device having a communication function, such as a smartphone.

The video generating unit 211 generates a video. The video is represented by, for example, image data of a plurality of consecutive images. The video generating unit 211 may sequentially generate image data of the plurality of consecutive images. The video generating unit 211 may generate a video from, for example, an image of a screen which is displayed on a display of the video generating device 200 executing an application and the like. The video generating unit 211 may generate a video by, for example, decoding encoded video data. The video generating unit 211 may generate a video from video data stored in a storage unit (not illustrated) of the video generating device 200. The video generating unit 211 may receive video data from a video providing device (not illustrated) and generate a video from the received video data.

The video generating device 200 and the video output device 100 can perform operations described below independently on each of a plurality of images included in the video generated by the video generating unit 211. Therefore, the operations of the video generating device 200 and the video output device 100 are described below which operations are performed on an image included in the video generated by the video generating unit 211.

The video generating unit 211 generates an image, for example, as a part of a video. The image generated by the video generating unit 211 is referred to as an output image. The video generating unit 211 transmits the output image generated as a part of the video to the control signal generating unit 212 and the synthesizing unit 214.

The control signal generating unit 212 generates control information representing control performed by the control unit 112 on the light source 122 from an output image generated by the video generating unit 211 when the projecting unit 120 projects the output image. The control information may be control instruction data in a format interpretable by the control unit 112.

The converting unit 213 converts the control information generated by the control signal generating unit 212 into an image (i.e., a control image). The converting method of converting the control information into the control image may be any converting method as long as the converting method can extract original control information from the control image. The converting unit 213 may divide, for example, a bit string representing the control information by a bit length of data representing a pixel value of a synthesized image (described below) synthesized by the synthesizing unit 214. The converting unit 213 may arrange a group of a plurality of pieces of data obtained by dividing the bit string representing the control information according to a predetermined rule and thus generate the control image.

The synthesizing unit 214 receives the output image from the video generating unit 211. The synthesizing unit 214 receives the control image from the control signal generating unit 212. The synthesizing unit 214 generates a synthesized image which is an image including an output area including the output image and a control area including the control image. The video generating unit 211 may generate an image including the output image in the output area and transmit the generated image to the synthesizing unit 214. In this case, the synthesizing unit 214 may generate a synthesized image by incorporating the control image received from the converting unit 213 in the control area of an image received from the video generating unit 211.

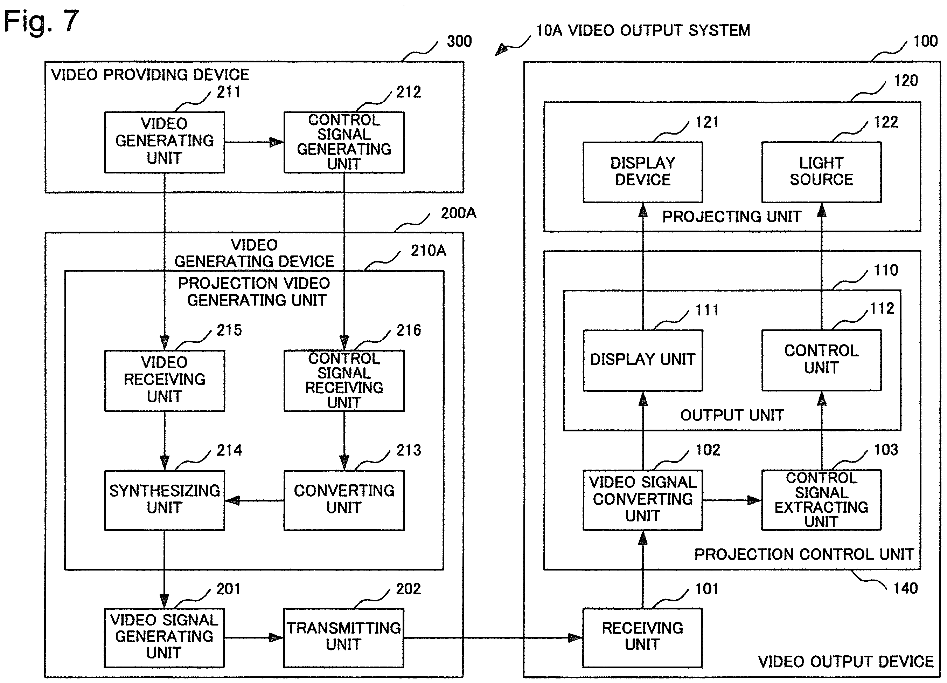

In the example illustrated in Fig. 1, directions to which the data is transmitted are not limited to directions of arrows. Also in examples illustrated in Fig. 7, Fig. 9, Fig. 12, and Fig. 13 described below, directions to which the data is transmitted are not limited to directions of arrows.

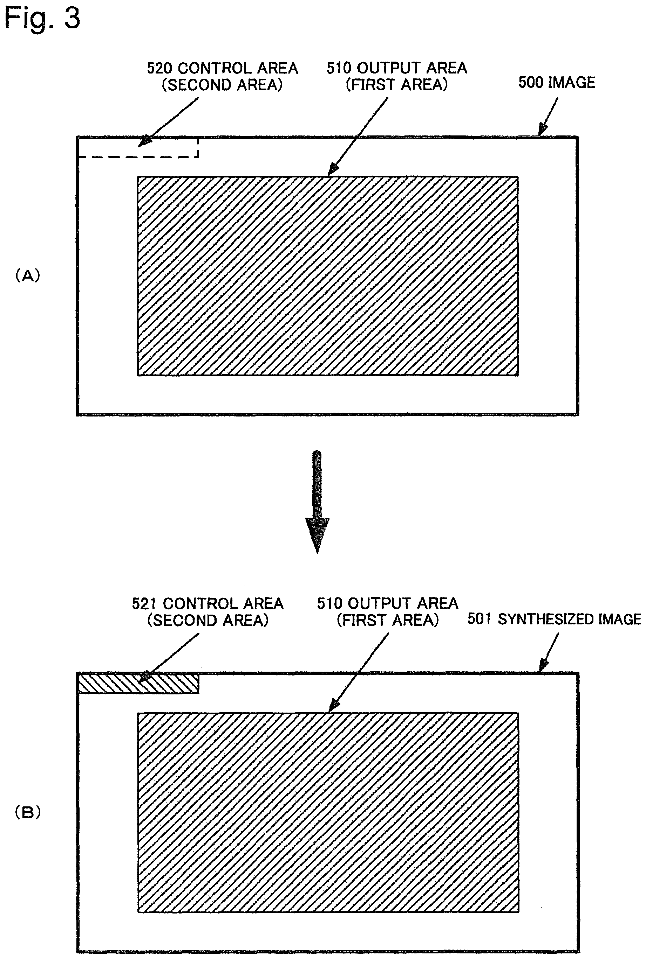

Figs. 3 schematically represents the above-described synthesized images including the output areas and the control areas. In each example embodiment of the present invention, the output area is also referred to as a first area. The control area is also referred to as a second area.

In the example illustrated in (A) of Fig. 3, an output area 510 is set in a center portion of an image 500. A control area 520 is set in an upper left portion of the image 500. Similarly, in the example illustrated in (B) of Fig. 3, the output area 510 is set in a center portion of a synthesized image 501. A control area 521 is set in an upper left portion of the synthesized image 501.

The output image is embedded in the output area 510 of the image 500. The control area 520 of the image 500 is not used. The synthesizing unit 214 may generate the above-described synthesized image by, for example, embedding the control image in the control area 520 of the image 500. (B) of Fig. 3 schematically represents the synthesized image 501 which is generated by embedding the control image in the control area 520 of the image 500. A position of the output area 510 and a position of the control area 521 in the synthesized image 501 are the same as a position of the output area 510 and a position of the control area 520 in the image 500, respectively. The output area 510 of the synthesized image 501 is the same as the output area of the image 500. The control image is embedded in the control area 521 of the synthesized image 501.

A size of the synthesized image may be set in advance. The position of the output area and the position of the control area may be set in advance so as not to overlap with each other. In this case, the synthesizing unit 214, the video signal converting unit 102 (described below) of the video output device 100, and the control signal extracting unit 103 (described below) of the video output device 100 may store the size of the synthesized image, the position of the output area, and the position of the control area which are set in advance.

The synthesizing unit 214 may appropriately set the output area and the control area depending on the output image and the control image. In this case, the synthesizing unit 214 may transmit data values representing the position of the output area and the position of the control area to the video output device 100 via, for example, the video signal generating unit 201 and the transmitting unit 202. The synthesizing unit 214 may appropriately set the size of the synthesized image depending on the output image and the control image. In this case, the synthesizing unit 214 may transmit a data value representing the size of the synthesized image to the video output device 100 via, for example, the video signal generating unit 201 and the transmitting unit 202. When the video generating device 200 and the video output device 100 are connected with each other by the HDMI cable, it is possible to inform the video output device 100 of each of the position of the output area, the position of the control area, and the size of the synthesized image by a CEC extension command. For example, the video signal generating unit 201 may generate an extension command informing of the position of the output area, an extension command informing of the position of the control area, and an extension command informing of the size of the synthesized image. Further, the transmitting unit 202 may transmit these extension commands to the video output device 100. In this case, the video signal converting unit 102 and the control signal extracting unit 103 of the video output device 100 may be designed to be able to interpret these extension commands.

The video signal generating unit 201 receives the synthesized image from the synthesizing unit 214. The video signal generating unit 201 converts the received synthesized image into a signal (hereinbelow, referred to as a video signal) in a format transmittable by the transmitting unit 202 to the video output device 100. When the video generating device 200 and the video output device 100 are connected with each other by the HDMI cable, the video signal generating unit 201 generates, from the synthesized image, a video signal (i.e., an HDMI signal) representing the synthesized image and conforming to the HDMI standard.

The transmitting unit 202 transmits the video signal generated by the video signal generating unit 201 to the receiving unit 101 of the video output device 100.

The receiving unit 101 receives the video signal representing the above-described synthesized image from the transmitting unit 202 of the video generating device 200.

The video signal converting unit 102 extracts, from the video signal received by the receiving unit 101, the output area of the synthesized image represented by the video signal as the output image. The video signal converting unit 102 extracts, from the video signal received by the receiving unit 101, the control area in the synthesized image represented by the video signal as the control image. The video signal converting unit 102 may reconstruct the synthesized image by converting the video signal received by the receiving unit 101 into the synthesized image. Further, the video signal converting unit 102 may extract the output area of the reconstructed synthesized image as the output image. The video signal converting unit 102 may extract the control area of the reconstructed synthesized image as the control image. As described above, the size of the synthesized image may be determined in advance. The video signal converting unit 102 may receive the size of the synthesized image from the video generating device 200 via the receiving unit 101. Further, the position of the output area and the position of the control area in the synthesized image may be determined in advance. The video signal converting unit 102 may receive the position of the output area and the position of the control area from the video generating device 200 via the receiving unit 101.

The video signal converting unit 102 transmits a signal representing the extracted output image to the display unit 111. The video signal converting unit 102 transmits a signal representing the extracted control image to the control signal extracting unit 103.

The control signal extracting unit 103 converts the signal representing the control image received from the video signal converting unit 102 into a control signal for controlling the light source 122. The control signal extracting unit 103 transmits the control signal which is obtained by converting the signal representing the control image to the control unit 112.

The display unit 111 displays the output image received from the video signal converting unit 102 on the display device 121. The display unit 111 may convert the signal representing the output image into a control signal for displaying the output image for the display device 121 which is, for example, the LCOS, transmit the control signal for displaying the output image to the display device 121, and thus display the output image on the display device 121.

The control unit 112 controls the light source 122 to irradiate the display device 121 with light from the light source 122 according to the control signal received from the control signal extracting unit 103. The control signal received by the control unit 112 may be a control signal interpretable by the light source 122. In this case, the control unit 112 may transmit the received control signal to the light source 122 without change. The light source 122 generates the light, such as laser light, according to the received control signal, and irradiates the display device 121 with the generated light.

As described above, the output image is one frame included in the video. The control signal is transmitted together with the output image as the synthesized image from the video generating device 200 to the video output device 100. The video output device 100 receives, for each frame, the output image and the control signal representing the control performed on the light source 122 when the output image is output. Therefore, the display device 121 and the light source 122 can cooperatively project the output image to the outside according to the control signal received by the display device 121 from the display unit 111 and the control signal received by the light source 122 from the control unit 112.

Next, operations of the video generating device 200 of the present example embodiment are described in detail with reference to the drawings.

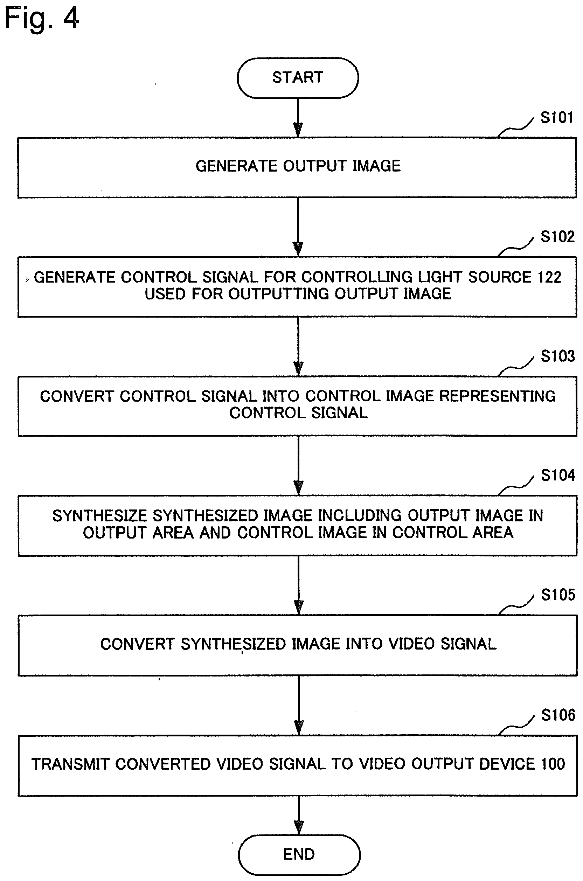

Fig. 4 is a flowchart illustrating an example of operations of the video generating device 200 of the present example embodiment.

Referring to Fig. 4, first, the video generating unit 211 generates the output image which is, for example, one frame of the video (step S101).

Next, the control signal generating unit 212 generates, on the basis of the output image generated by the video generating unit 211, the control signal for controlling the light source 122 used for outputting the output image (step S102). The control signal generating unit 212 may generate the control signal for controlling the light source 122 according to a method determined depending on the projecting unit 120.

Next, the converting unit 213 converts the control signal generated by the control signal generating unit 212 into the control image which is an image representing the control signal (step S103). The control image may be an image converted such that the control signal can be extracted from the control image. More specifically, conversion between the control signal and the control image may be reversible conversion.

Next, the synthesizing unit 214 generates the synthesized image which includes the output image in the output area and the control image in the control area (step S104). The synthesizing unit 214 may generate the synthesized image of which the output area is the output image and the control area is the control image.

Next, the video signal generating unit 201 converts the synthesized image into a video signal in the format transmittable by the transmitting unit 202 to the video output device 100 (step S105). As described above, when the video generating device 200 and the video output device 100 are connected with each other by the HDMI cable, the video signal generating unit 201 may convert the synthesized image into the HDMI signal.

Next, the transmitting unit 202 transmits the converted (i.e., obtained by converting the synthesized image) video signal to the video output device 100 (step S106).

The video generating device 200 may repeat the above-described operations illustrated in Fig. 4 with respect to each frame in the video.

Next, operations of the video output device 100 of the present example embodiment are described in detail with reference to the drawings.

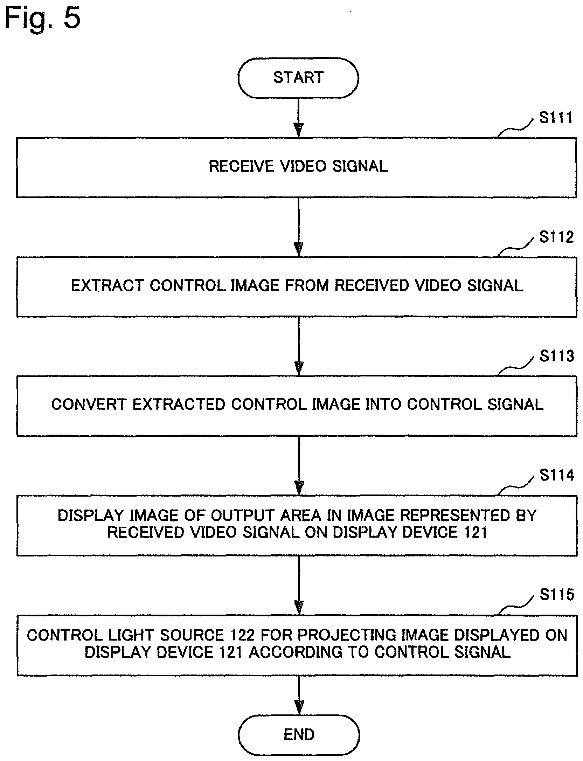

Fig. 5 is a flowchart illustrating an example of operations of the video output device 100 of the present example embodiment.

Referring to Fig. 5, first, the receiving unit 101 receives the video signal from the video generating device 200 (step Sill). When the video generating device 200 and the video output device 100 are connected with each other by the HDMI cable, a signal received by the receiving unit 101 is the HDMI signal.

Next, the video signal converting unit 102 extracts the control image from the video signal received by the receiving unit 101 (step S112). As described above, the video signal converting unit 102 may extract, from the video signal, the image of the control area of the synthesized image represented by the video signal as the control image. In order to do that, the video signal converting unit 102 may first convert the video signal into an image, and then generate the synthesized image from the video signal. Then, the video signal converting unit 102 may extract an image of the control area of the synthesized image as a control image. Furthermore, the video signal converting unit 102 may extract an image of the output area of the synthesized image as an output image.

Next, the control signal extracting unit 103 converts the extracted control image into the control signal (step S113) and thus extracts the control signal.

Next, the display unit 111 displays the output image which is the image of the output area in the image represented by the video signal received by the receiving unit 101 on the display device 121 (step S114). The display unit 111 receives the output image from the video signal converting unit 102, and displays the received output image on the display device 121.

The control unit 112 controls the light source 122 according to the control signal extracted by the control signal extracting unit 103 (step S115). The light source 122 emits the laser light under control according to the control signal and thus projects the image (a reproduced image) displayed on the display device 121 to the outside of the video output device 100.

The video output device 100 may repeat the operations in Fig. 5 described above for each image received from the video generating device 200 as the video signal. The video output device 100 may perform the operations in steps S112 and S113 and the operation in step S114 in reverse order.

The present example embodiment described above has an effect of being capable of executing control synchronizing with an output image of the light source 122 used for outputting the output image without adding a control interface.

The reason is that the synthesizing unit 214 synthesizes a synthesized image that includes an output image which is an image to be output and the control image converted from the control signal representing control on the light source 122 as areas. The display unit 111 of the output unit 110 in the video output device 100 to which the synthesized image is transmitted displays the output image included in the synthesized image as the area on the display device 121. In addition, the control unit 112 of the output unit 110 in the video output device 100 to which the synthesized image is transmitted controls the light source 122 according to the control signal obtained by converting the control image included in the synthesized image. As described above, the control signal is transmitted as a part of an image, so that the control synchronizing with an output image of the light source 122 used for outputting the output image can be executed without adding a communication interface for control.

The present example embodiment further has an effect of enabling the device to reduce its weight and cost.

The reason is that the control signal is transmitted as a part of the synthesized image as described above, and thus the dedicated interface is not necessary for transmitting the control signal for controlling the light source 122.

Next, a modification of the present example embodiment is described in detail with reference to the drawings.

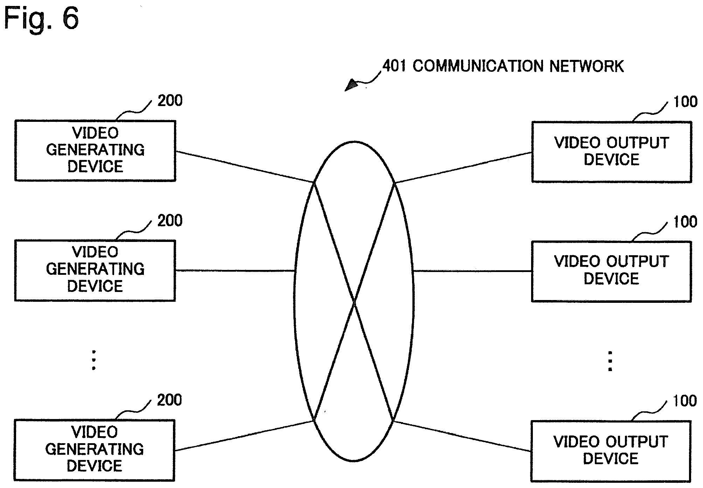

Fig. 6 is a diagram schematically illustrating a configuration example of the modification of the present example embodiment. As illustrated in Fig. 6, a plurality of video output devices 100 may exist. A plurality of video generating devices 200 may exist. In the example illustrated in Fig. 6, the plurality of the video output devices 100 and the plurality of the video generating devices 200 are communicably connected with each other by a communication network 401.

Each of the video generating devices 200 may transmit video signals, for example, at the same time to the plurality of the video output devices 100. Each of the video output devices 100 may receive a video signal from a video generating device 200 selected from the plurality of video generating devices 200.

### <Implementation Example of First Example Embodiment>

Next, an implementation example of the video output system 10 of the first example embodiment of the present invention is described in detail with reference to the drawings.

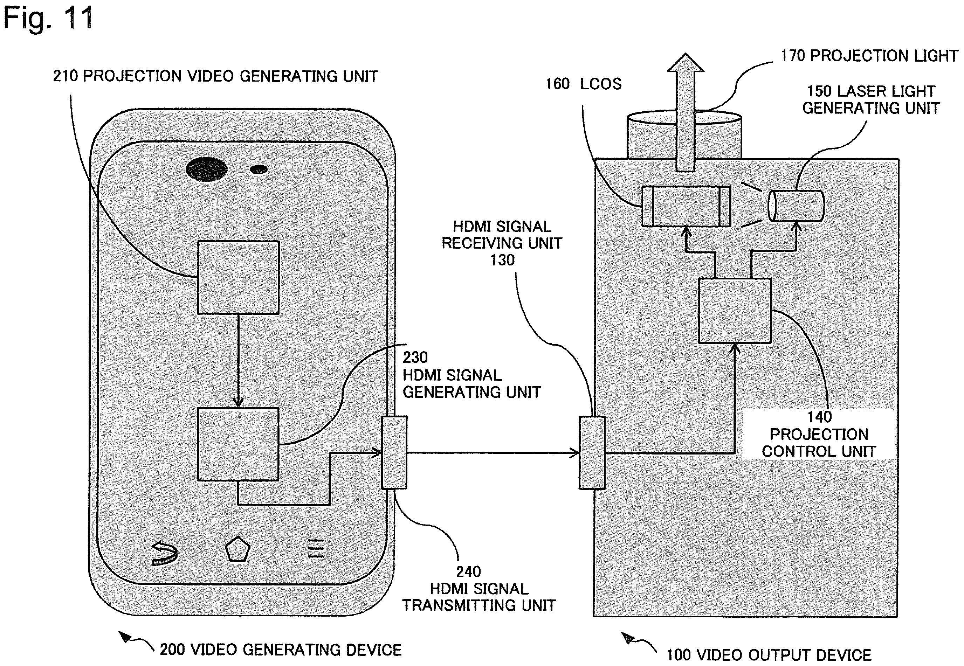

Fig. 11 is a diagram schematically illustrating the implementation example of the video output system 10 of the first example embodiment of the present invention. In the example illustrated in Fig. 11, the video generating device 200 is a smartphone. The video generating device 200 and the video output device 100 are connected with each other via an HDMI cable.

In the video output device 100, an HDMI signal receiving unit 130 operates as the above-described receiving unit 101. An LCOS 160 operates as the display device 121. A laser light generating unit 150 operates as the light source 122. In the video generating device 200, an HDMI signal generating unit 230 operates as the above-described video signal generating unit 201. An HDMI signal transmitting unit 240 operates as the transmitting unit 202.

The HDMI signal generating unit 230 converts the synthesized image including the output image and the control image generated by the projection video generating unit 210 into the HDMI signal. The HDMI signal transmitting unit 240 transmits the HDMI signal to the HDMI signal receiving unit 130 of the video output device via the HDMI cable connecting the video generating device 200 and the video output device.

The HDMI signal receiving unit 130 receives the HDMI signal converted from the synthesized image. The projection control unit 140 extracts information corresponding to the output image from the HDMI signal received by the HDMI signal receiving unit 130. The projection control unit 140 converts the extracted information corresponding to the output image into a video signal for the LCOS 160 (i.e., a signal for displaying the output image on the LCOS 160). The projection control unit 140 transmits the video signal for the LCOS 160 to the LCOS 160. The LCOS 160 displays the output image.

The projection control unit 140 further extracts information corresponding to the control image from the HDMI signal received by the HDMI signal receiving unit 130. The projection control unit 140 converts the extracted information corresponding to the control image into the control signal for controlling the laser light generating unit 150. The projection control unit 140 transmits the control signal for controlling the laser light generating unit 150 to the laser light generating unit 150. The laser light generating unit 150 generates laser light according to the received control signal and irradiates the LCOS 160 with the generated laser light.

The laser light generating unit 150 and the LCOS 160 project, to the outside (for example, a screen), projection light 170 which is a beam generated by the laser light generating unit 150 irradiating the LCOS 160 with the laser light. The laser light generating unit 150 and the LCOS 160 project the projection light 170 to, for example, the screen, so that a video is displayed on a part of the screen to which the projection light 170 is projected.

### <Second Example Embodiment>

Next, a second example embodiment of the present invention is described in detail with reference to the drawings.

Fig. 7 is a block diagram illustrating a configuration of a video output system 10A of the present example embodiment.

Referring to Fig. 7, the video output system 10A of the present example embodiment includes the video output device 100, a video generating device 200A, and a video providing device 300. Hereinbelow, different points of the video output system 10A of the present example embodiment with respect to the video output system 10 of the first example embodiment are mainly described. Components which are of the video output system 10A and are the same as components of the video output system 10 of the first example embodiment are assigned the same reference signs, and description thereof are omitted.

The video output device 100 of the present example embodiment is the same as the video output device 100 of the first example embodiment.

The video generating device 200A of the present example embodiment includes the video signal generating unit 201 and the transmitting unit 202. The video generating device 200A further includes a projection video generating unit 210A instead of the projection video generating unit 210. The projection video generating unit 210A includes the converting unit 213 and the synthesizing unit 214. The projection video generating unit 210A further includes a video receiving unit 215 and a control signal receiving unit 216 instead of the video generating unit 211 and the control signal generating unit 212.

The video providing device 300 includes the video generating unit 211 and the control signal generating unit 212.

The video generating unit 211 of the present example embodiment transmits a generated image that is, for example, a frame of a video to the video receiving unit 215 of the video generating device 200A. The control signal generating unit 212 of the present example embodiment transmits a generated control signal to the control signal receiving unit 216 of the video generating device 200A. Except for the above-described points, the video generating unit 211 and the control signal generating unit 212 of the present example embodiment are the same as the video generating unit 211 and the control signal generating unit 212 of the first example embodiment.

The video receiving unit 215 receives an image that is, for example, a frame of the video from the video generating unit 211 of the video providing device 300. The video receiving unit 215 transmits the received image to the synthesizing unit 214.

The control signal receiving unit 216 receives the generated control signal from the control signal generating unit 212 of the video providing device 300. The control signal receiving unit 216 transmits the received control signal to the converting unit 213.

The synthesizing unit 214 receives the image from the video receiving unit 215. The converting unit 213 receives the control signal from the control signal receiving unit 216. The synthesizing unit 214 and the converting unit 213 of the present example embodiment are the same as the synthesizing unit 214 and the converting unit 213 of the first example embodiment except for the above-described points.

Operations of the video providing device 300 of the present example embodiment are described in detail with reference to the drawings. The video providing device 300 of the present example embodiment performs the operation in step S101 and step S102 illustrated in Fig. 4. Then, the video generating unit 211 of the video providing device 300 transmits the generated image to the video receiving unit 215 of the video generating device 200A. In addition, the control signal generating unit 212 of the video providing device 300 transmits the generated control signal to the control signal receiving unit 216 of the video generating device 200A. The video providing device 300 performs the above-described operations separately for each frame included in the video.

Next, operations of the video generating device 200A of the present example embodiment are described in detail with reference to the drawings.

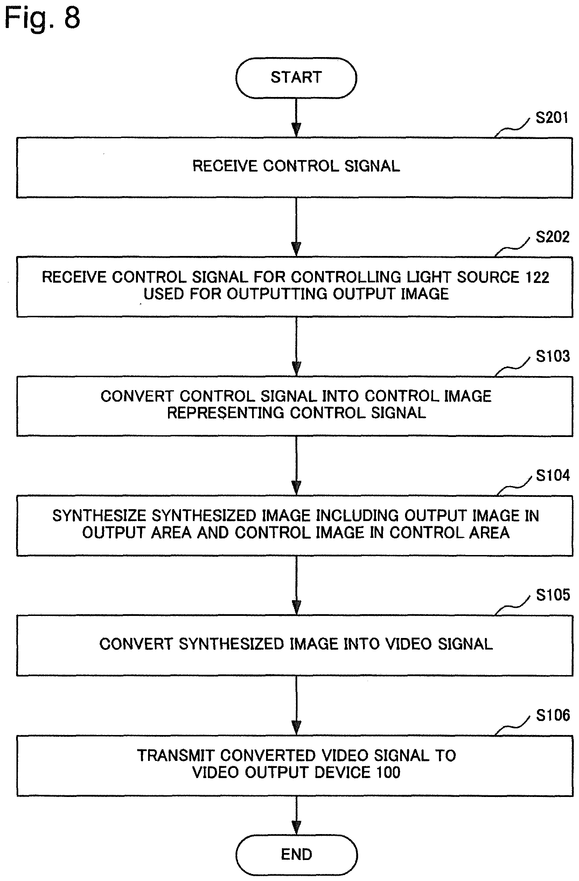

Fig. 8 is a flowchart illustrating an example of the operations of the video generating device 200A of the present example embodiment.

Referring to Fig. 8, first, the video receiving unit 215 receives the generated control signal from the control signal generating unit 212 of the video providing device 300 (step S201).

Next, the converting unit 213 receives the control signal for controlling the light source 122 used for outputting the output image from the control signal receiving unit 216 (step S202).

The operations in step S103 and the subsequent steps in Fig. 8 are the same as the operations of the video generating device 200 of the first example embodiment in step S103 and the subsequent steps illustrated in Fig. 4.

The operations of the video output device 100 of the present example embodiment are the same as the operations of the video output device 100 of the first example embodiment illustrated in Fig. 5.

The present example embodiment described above has the effects that is the same as those of the first example embodiment. The reasons are the same as the reasons why the effects of the first example embodiment are produced.

### <Third Example Embodiment>

Next, a third example embodiment of the present invention is described in detail with reference to the drawings. The present example embodiment represents a minimum configuration of each of the example embodiments of the present invention.

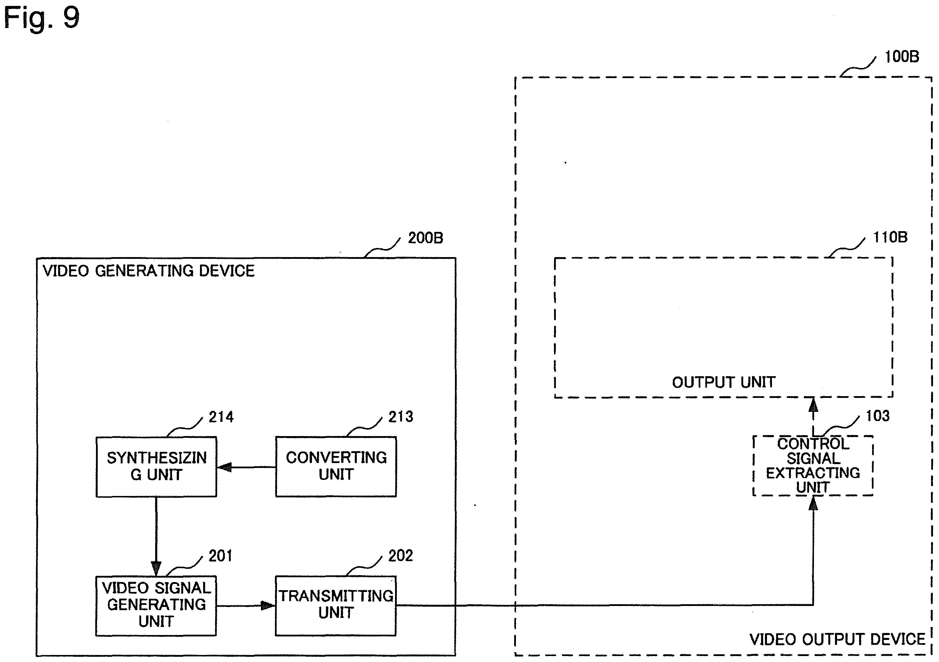

Fig. 9 is a block diagram illustrating a configuration of a video generating device 200B of the present example embodiment.

Referring to Fig. 9, the video generating device 200B of the present example embodiment includes the converting unit 213, the synthesizing unit 214, the video signal generating unit 201, and the transmitting unit 202.

The converting unit 213 converts a control signal, generated on the basis of an output image, for controlling the light source used for outputting the output image into a control image which is an image representing the control signal. The synthesizing unit 214 synthesizes a synthesized image in which the control image is incorporated in a second area, which is different from a first area, of an image including the first area which is an image area including the output image. The video signal generating unit 201 converts the synthesized image into a video signal. The transmitting unit 202 transmits the video signal to a video output device 100B.

The video output device 100B includes the control signal extracting unit 103 and an output unit 110B.

The control signal extracting unit 103 extracts the second area in the synthesized image represented by the received video signal as the control image, and converts the extracted control image into a control signal upon reception of the video signal. The output unit 110B outputs an image of the first area in the image represented by the received video signal as the output image while controlling the light source according to the converted control signal.

### <Other Example Embodiments>

Each of the video output device 100, the video generating device 200, the video generating device 200A, and the video generating device 200B can be achieved by hardware such as a circuit. The circuit is, for example, a dedicated circuit. The circuit may be, for example, a memory and a processor included in a computer. The circuit may be implemented as a single chip. The circuit may be implemented as a plurality of chips. Each of the video output device 100, the video generating device 200, the video generating device 200A, and the video generating device 200B may be implemented as a single device. The device may include the above-described circuit. Each of the video output device 100, the video generating device 200, the video generating device 200A, and the video generating device 200B may be implemented as a plurality of devices. Each of the plurality of devices may include at least one of the above-described circuits.

Each of the video output device 100, the video generating device 200, the video generating device 200A, and the video generating device 200B can be achieved by a processor and a program controlling the processor, dedicated hardware, or a combination of a processor and a program controlling the processor, and dedicated hardware.

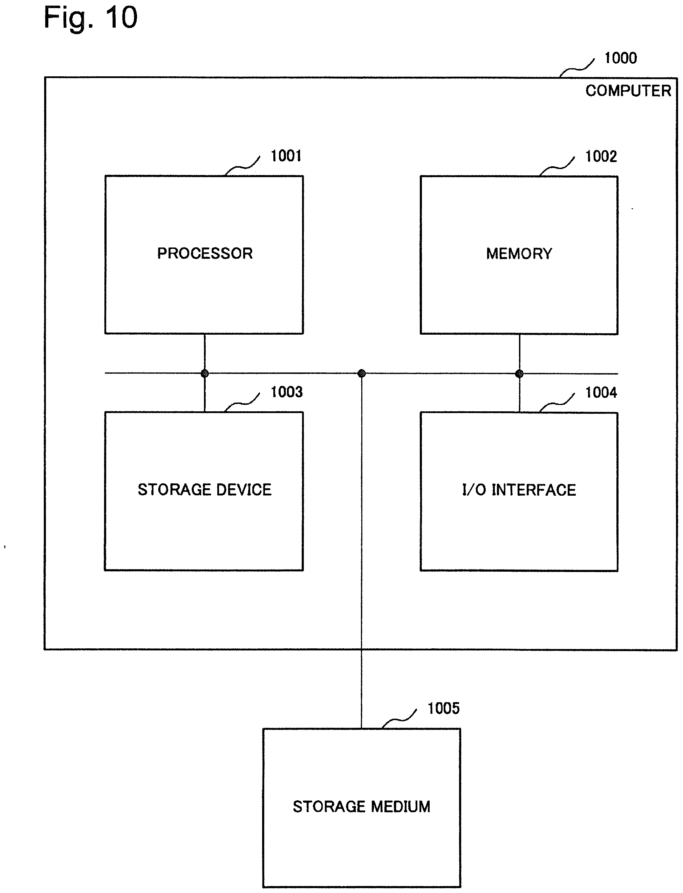

Fig. 10 is a diagram illustrating an example of a hardware configuration of a computer 1000 by which the video output device 100, the video generating device 200, the video generating device 200A, and the video generating device 200B can be achieved. Referring to Fig. 10, the computer 1000 includes a processor 1001, a memory 1002, a storage device 1003, and an I/O (Input/Output) interface 1004. The computer 1000 can access a storage medium 1005. The memory 1002 and the storage device 1003 are, for example, a RAM (Random Access Memory) and a storage device such as a hard disk. The storage medium 1005 is, for example, a RAM, a storage device such as a hard disk, a ROM (Read Only Memory), and a portable storage medium. The storage device 1003 may be the storage medium 1005. The processor 1001 can read and write data and a program to and from the memory 1002 and the storage device 1003. The processor 1001 can access a device connected by, for example, the HDMI cable via the I/O interface 1004. The processor 1001 can access the storage medium 1005. The storage medium 1005 stores a program that causes the computer 1000 to operate as the video output device 100, the video generating device 200, the video generating device 200A, or the video generating device 200B.

The processor 1001 loads, into the memory 1002, the program which causes the computer 1000 to operate as the video output device 100, the video generating device 200, the video generating device 200A, or the video generating device 200B and is stored in the storage medium 1005. Then, the processor 1001 executes the program loaded in the memory 1002, so that the computer 1000 operates as the video output device 100, the video generating device 200, the video generating device 200A, or the video generating device 200B.

The receiving unit 101, the video signal converting unit 102, the control signal extracting unit 103, the output unit 110, the display unit 111, the control unit 112, and the projection control unit 140 can be achieved by, for example, the processor 1001 executing a program loaded in the memory 1002. The video signal generating unit 201, the transmitting unit 202, the projection video generating unit 210, and the projection video generating unit 210A can be achieved by, for example, the processor 1001 executing a program loaded in the memory 1002. The video generating unit 211, the control signal generating unit 212, the converting unit 213, the synthesizing unit 214, the video receiving unit 215, and the control signal receiving unit 216 can be achieved by, for example, the processor 1001 executing a program loaded in the memory 1002. A part or a whole of the receiving unit 101, the video signal converting unit 102, the control signal extracting unit 103, the output unit 110, the display unit 111, the control unit 112, the projecting unit 120, the display device 121, the light source 122, and the projection control unit 140 can be also achieved by a dedicated circuit. A part or a whole of the video signal generating unit 201, the transmitting unit 202, the projection video generating unit 210, the video generating unit 211, the control signal generating unit 212, the converting unit 213, the synthesizing unit 214, the video receiving unit 215, and the control signal receiving unit 216 can also be achieved by a dedicated circuit.

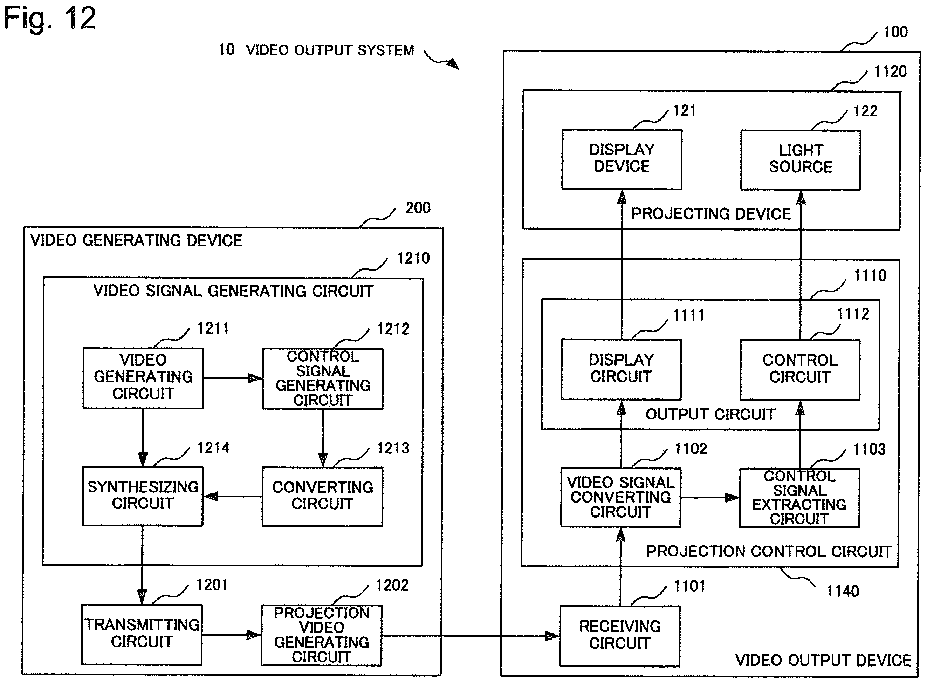

Fig. 12 is a block diagram illustrating an example of a configuration of the video output system 10 according to the first example embodiment of the present invention including the video output device 100 and the video generating device 200 which are achieved by dedicated circuits.

Referring to Fig. 12, the video output device 100 is implemented so as to include a receiving circuit 1101, a projection control circuit 1140, and a projecting device 1120. The projection control circuit 1140 includes a video signal converting circuit 1102, a control signal extracting circuit 1103, and an output circuit 1110. The output circuit 1110 includes a display circuit 1111 and a control circuit 1112. The projecting device 1120 includes the display device 121 and the light source 122.

The receiving circuit 1101 operates as the receiving unit 101. The projection control circuit 1140 operates as the projection control unit 140. The projecting device 1120 operates as the projecting unit 120. The video signal converting circuit 1102 operates as the video signal converting unit 102. The control signal extracting circuit 1103 operates as the control signal extracting unit 103. The output circuit 1110 operates as the output unit 110. The display circuit 1111 operates as the display unit 111. The control circuit 1112 operates as the control unit 112.

The video generating device 200 is implemented so as to include a video signal generating circuit 1201, a transmitting circuit 1202, and a projection video generating circuit 1210. The projection video generating circuit 1210 includes a video generating circuit 1211, a control signal generating circuit 1212, a converting circuit 1213, and a synthesizing circuit 1214.

The video signal generating circuit 1201 operates as the video signal generating unit 201. The transmitting circuit 1202 operates as the transmitting unit 202. The projection video generating circuit 1210 operates as the projection video generating unit 210. The video generating circuit 1211 operates as the video generating unit 211. The converting circuit 1213 operates as the converting unit 213. The synthesizing circuit 1214 operates as the synthesizing unit 214.

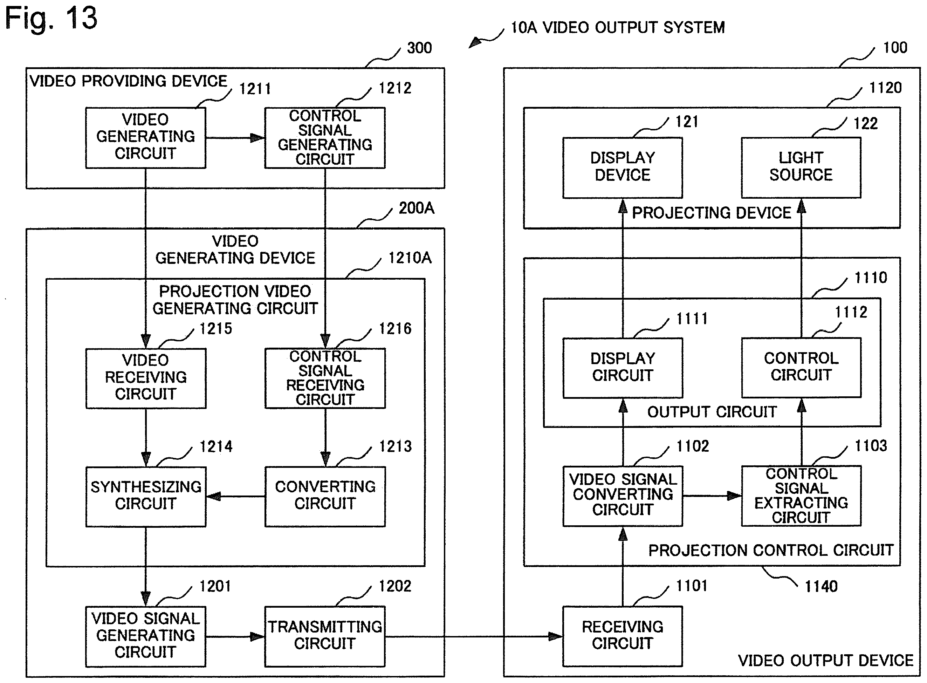

Fig. 13 is a block diagram illustrating an example of a configuration of the video output system 10A according to the second example embodiment of the present invention including the video output device 100, the video generating device 200A, and the video providing device 300 which are achieved by dedicated circuits. The video output device 100 of the present example embodiment is the same as the video output device 100 of the first example embodiment.

The video generating device 200A is implemented so as to include the video signal generating circuit 1201, the transmitting circuit 1202, and a projection video generating circuit 1210A. The projection video generating circuit 1210A is implemented so as to include the converting circuit 1213, the synthesizing circuit 1214, a video receiving circuit 1215, and a control signal receiving circuit 1216. The video signal generating circuit 1201, the transmitting circuit 1202, the converting circuit 1213, and the synthesizing circuit 1214 are respectively the same as the circuits to which the same names and reference signs illustrated in Fig. 12 are assigned. The video receiving circuit 1215 operates as the video receiving unit 215. The control signal receiving circuit 1216 operates as the control signal receiving unit 216.

The video providing device 300 is implemented so as to include the video generating circuit 1211 and the control signal generating circuit 1212. The video generating circuit 1211 and the control signal generating circuit 1212 are respectively the same as the circuits to which the same names and reference signs illustrated in Fig. 12 are assigned.

The present invention has been described above with reference to the example embodiments, however, the present invention is not limited to the above-described example embodiments. The configuration and details of the present invention can be variously modified in a manner understandable by those skilled in the art within the scope of the present invention.

This application claims the benefit of priority based on Japanese Patent Application No. 2014-249981, filed December 10, 2014, and the disclosure of which are incorporated herein in its entirety by reference.

### Reference signs List

- 10: Video output system
- 10A: Video output system
- 100: Video output device
- 101: Receiving unit
- 102: Video signal converting unit
- 103: Control signal extracting unit
- 110: Output unit
- 111: Display unit
- 112: Control unit
- 120: Projecting unit
- 121: Display device
- 122: Light source
- 130: HDMI signal receiving unit
- 140: Projection control unit
- 150: Laser light generating unit
- 160: LCOS
- 170: Projection light
- 200: Video generating device
- 200A: Video generating device
- 200B: Video generating device
- 201: Video signal generating unit
- 202: Transmitting unit
- 210: Projection video generating unit
- 210A: Projection video generating unit
- 211: Video generating unit
- 212: Control signal generating unit
- 213: Converting unit
- 214: Synthesizing unit
- 215: Video receiving unit
- 216: Control signal receiving unit
- 230: HDMI signal generating unit
- 240: HDMI signal transmitting unit
- 300: Video providing device
- 500: Image
- 501: Synthesized image
- 510: Output area
- 520: Control area
- 521: Control area
- 1000: Computer
- 1001: Processor
- 1002: Memory
- 1003: Storage device
- 1004: I/O interface
- 1005: Storage medium
- 1101: Receiving circuit
- 1102: Video signal converting circuit
- 1103: Control signal extracting circuit
- 1110: Output circuit
- 1111: Display circuit
- 1112: Control circuit
- 1120: Projecting device
- 1140: Projection control circuit
- 1201: Video signal generating circuit
- 1202: Transmitting circuit
- 1210: Projection video generating circuit
- 1210A: Projection video generating circuit
- 1211: Video generating circuit
- 1212: Control signal generating circuit
- 1213: Converting circuit
- 1214: Synthesizing circuit
- 1215: Video receiving circuit
- 1216: Control signal receiving circuit

## Claims

1. A video generating device comprising:
converting means for converting a control signal into a control image, the control signal being generated based on an output image and controlling a light source used for outputting the output image, the control image being an image representing the control signal;
synthesizing means for synthesizing a synthesized image that is an image in which the control image is incorporated in a second area, the second area being different from a first area included in the image, the first area being an image area including the output image;
video signal generating means for converting the synthesized image into a video signal; and
transmitting means for transmitting the video signal to a video output device, the video output device including control signal extracting means for extracting, as the control image, the second area of the synthesized image represented by the received video signal, and converting the extracted control image into a control signal upon receiving of the video signal, and output means for outputting an image of the first area of the image represented by the received video signal as the output image while controlling the light source according to the converted control signal.

2. The video generating device according to claim 1, further comprising:
control signal generating means for generating the control signal based on the output image.

3. The video generating device according to claim 1 or 2, wherein
the output means projects the output image by displaying, as the output image, the image of the first area of the image represented by the received video signal on a display device, and controlling the light source projecting the output image displayed on the display device according to the control signal.

4. A video output device comprising:
receiving means for receiving a video signal which is a signal converted from a synthesized image that is an image in which a control image is incorporated in a second area, the second area being different from a first area included in the image, the control image being converted from a control signal and representing the control signal, the control signal being generated based on an output image and controlling a light source used for outputting the output image, the first area being an image area including the output image;
control signal extracting means for extracting, as the control image, the second area of the synthesized image represented by the received video signal, and converting the extracted control image into a control signal upon receiving of the video signal; and
output means for outputting an image of the first area of the image represented by the received video signal as the output image while controlling the light source according to the converted control signal.

5. A video output system comprising:
a video generating device including:
converting means for converting a control signal into a control image, the control signal being generated based on an output image and controlling a light source used for outputting the output image, the control image being an image representing the control signal;
synthesizing means for synthesizing a synthesized image that is an image in which the control image is incorporated in a second area, the second area being different from a first area included in the image including the first area as an image area including the output image;
video signal generating means for converting the synthesized image into a video signal; and
transmitting means for transmitting the video signal to a video output device; and
the video output device including:
receiving means for receiving the video signal;
control signal extracting means for extracting, as the control image, the second area of the synthesized image represented by the received video signal, and converting the extracted control image into a control signal upon receiving of the video signal; and
output means for outputting an image of the first area of the image represented by the received video signal as the output image while controlling the light source according to the converted control signal.

6. A video generating method comprising:
converting a control signal into a control image, the control signal being generated based on an output image and controlling a light source used for outputting the output image, the control image being an image representing the control signal;
synthesizing a synthesized image that is an image in which the control image is incorporated in a second area, the second area being different from a first area included in the image, including the first area as an image area including the output image;
converting the synthesized image into a video signal; and
transmitting the video signal to a video output device, the video output device including control signal extracting means for extracting, as the control image, the second area of the synthesized image represented by the received video signal, and converting the extracted control image into a control signal upon receiving of the video signal, and output means for outputting an image of the first area of the image represented by the received video signal as the output image while controlling the light source according to the converted control signal.

7. A video output method comprising:
receiving a video signal which is a signal converted from a synthesized image that is an image in which a control image is incorporated in a second area, the second area being different from a first area included in the image, the control image being converted from a control signal and representing the control signal, the control signal being generated based on an output image and controlling a light source used for outputting the output image, the first area being an image area including the output image;
extracting, as the control image, the second area of the synthesized image represented by the received video signal, and converting the extracted control image into a control signal upon receiving of the video signal; and
outputting an image of the first area of the image represented by the received video signal as the output image while controlling the light source according to the converted control signal.

8. A video output system control method comprising:
causing a video generating device to perform operations of:
converting a control signal into a control image, the control signal being generated based on an output image and controlling a light source used for outputting the output image, the control image being an image representing the control signal;
synthesizing a synthesized image that is an image in which the control image is incorporated in a second area, the second area being different from a first area included in the image, the first area being an image area including the output image;
converting the synthesized image into a video signal; and
transmitting the video signal to a video output device; and
causing the video output device to perform operations of:
receiving the video signal;
extracting the control image from the second area of the received synthesized image upon receiving of the video signal, and converting the extracted control image into a control signal; and
outputting an image of the first area of the image represented by the received video signal as the output image while controlling the light source according to the converted control signal.

9. A storage medium storing a video generating program that causes a computer to operate as:
converting means for converting a control signal into a control image, the control signal being generated based on an output image and controlling a light source used for outputting the output image, the control image being an image representing the control signal;
synthesizing means for synthesizing a synthesized image that is an image in which the control image is incorporated in a second area, the second area being different from a first area included in the image, the first area being an image area including the output image;
video signal generating means for converting the synthesized image into a video signal; and
transmitting means for transmitting the video signal to a video output device, the video output device including control signal extracting means for extracting, as the control image, the second area of the synthesized image represented by the received video signal, and converting the extracted control image into a control signal upon receiving of the video signal; and output means for outputting an image of the first area of the image represented by the received video signal as the output image while controlling the light source according to the converted control signal.

10. A storage medium storing a video output program that causes a computer to operate as:
receiving means for receiving a video signal which is a signal converted from a synthesized image that is an image in which a control image is incorporated in a second area, the second area being different from a first area included in the image, the control image being converted from a control signal and representing the control signal, the control signal being generated based on an output image and controlling a light source used for outputting the output image, the first area being an image area including the output image;
control signal extracting means for extracting, as the control image, the second area of the synthesized image represented by the received video signal, and converting the extracted control image into a control signal upon receiving of the video signal; and
output means for outputting an image of the first area of the image represented by the received video signal as the output image while controlling the light source according to the converted control signal.
